# EUROPEAN PATENT SPECIFICATION

(11) **EP 1 477 368 B1**
(45) Date of publication and mention of the grant of the patent: **15.08.2007**
(21) Application number: 03010574.6
(22) Date of filing: 12.05.2003
(51) Int. Cl.: B60R 13/10, G02B 6/00

(54) **Illuminated license plate for vehicles and vehicle provided with the same**
Leuchtende Kennzeichentafel und damit ausgestattetes Kraftfahrzeug
Plaque de immatriculation lumineux et véhicule munie d'une telle plaque

(43) Date of publication of application: 17.11.2004
(73) Proprietor: 3M Innovative Properties Company, St. Paul, MN 55133-3427 (US)
(72) Inventor: Eberwein, Arnold, 40668 Meerbusch (DE)
(74) Representative: Hilleringmann, Jochen

(56) References cited:
- DE-A- 10 132 998
- DE-U- 29 508 596
- US-A- 4 005 538
- US-A- 5 816 681
- US-A- 6 149 204
- US-A1- 2002 178 627
- PATENT ABSTRACTS OF JAPAN vol. 1998, no. 10, 31 August 1998 (1998-08-31) -& JP 10 119669 A (INOUE KATSUO), 12 May 1998 (1998-05-12)

## Description

### BACKGROUND OF THE INVENTION

### Field of the Invention

The present invention relates to an illuminated license plate for a vehicle and, in particular, to a back-lit license plate. Moreover, the invention relates to a vehicle, in particular a power driven vehicle, e.g. a car, a motorcycle, a train, an aircraft, or a ship, the body of which comprises such an illuminated license plate.

### Related Prior Art

Externally illuminated license plates made of metal or other materials are commonly known. These known license plates are illuminated by normally two or three lamps arranged in front of and below or above the license plate. The light of the lamps is directed towards the front face of the license plate for illuminating the same. However, the known external illumination designs are suffering from a non-uniform illumination of the license plate. Moreover, the light sources externally arranged from the license plate limit the design freedom of the car designers.

In EP-A-1 262 373 a back-lit license plate is described in which a layer of luminescent material is used in front of which a light-transmissive retro-reflective film is arranged. Arranged in front of the light-transmissive retro-reflective film is a light transmissive indicia film provided with indicia. A similar illuminated license plate is disclosed in US-A-5,692,327. In order to obtain a relatively even illumination of these known license plates comparatively high voltages with relatively high frequencies have to be applied to the luminescent material. However this configuration results in a relatively low efficiency due to the relatively high electrical input energy, and requires additional electronics and, due to the higher voltages, special safety features. Also electromagnetic comparability/electromagnetic interference (EMC/EMI) shielding is basically necessary. Therefore, these known designs for back-lit license plates are not so cost effective.

Moreover, it is generally known to use other illumination systems for back-lit displays. These known displays generally utilize light guides having first and second opposed major faces and a light source arranged to direct light into the light guide from one lateral side thereof. The light is guided within the light guide by total internal reflection and is extracted through one of the two major faces for illuminating a display or the like. Examples for those illuminated displays are disclosed in WO-A-01/71248, EP-B-0 534 140, EP-A-0 878 720, US-A-5,375,043, and DE-C-38 25 436.

JP-A-10119669 discloses an illuminated license plate comprising a light guide which is edge lit by means of an elongate fluorescent lamp. The light of the lamp enters into a side face of the light guide and exits the light guide out of its front face where a diffuse film is located. In front of the diffuse film some indicia are arranged.

There is a need for a back-lit license plate for vehicles being of a simple and reliable construction for homogeneous internal illumination.

### SUMMARY OF THE INVENTION

The invention provides an illuminated license plate for vehicles wherein the license plate comprises
- a light guide having opposite major front and back faces and side faces therebetween,
- an elongate light source arranged along at least a portion of at least one of the side faces of the light guide for illuminating the light guide,
- a light-transmissive retro-reflective film, and
- indicia,
- wherein the light-transmissive retro-reflective film and the indicia are arranged in front of the front face of the light guide.

In the license plate according to the invention an edge-lit hollow or solid light guide is utilized having two opposite front and back major faces and side faces therebetween. An elongate light source is arranged along at least a portion of at least one of the side faces of the light guide for emitting light into the light guide. The elongate light source emits light substantially along its longitudinal direction and comprises an elongated luminant, like a light tube, e.g. a fluorescent tube, or several individual luminants spaced from each other and arranged adjacent to each other along the longitudinal direction of the light source. Accordingly, the elongate light source can comprise a linear array of separate light emitting elements.

In front of the front face of the light guide, there are arranged a light-transmissive retro-reflective film and indicia in the form of, for example graphics and/or characters or the like. The indicia can be directly arranged, e.g. by printing, on the light-transmissive retro-reflective film or at the front face of the light guide or can be supported by an additional film (indicia film). The light-transmissive retro-reflective film can be beaded, prismatic or provided with cube corners as basically known to those skilled in the art. Basically, each type of light-transmissive retro-reflective film can be used. In particular those light-transmissive retro-reflective films can be used which are known from traffic signs. For instance, the cube corner retro-reflective film as described in US-A-4,588,258, US-A-5,122,902 and WO-A-98/20375 is useful as the light-transmissive retro-reflective film for the illuminated license plate according to the invention. Also a beaded retro-reflective film comprising retro-reflective microspheres as used in the traffic sign of US-A-4,005,538 can be employed.

Within the light guide, light is transmitted by total internal reflection at the front and back and side faces until the light rays impinge onto the front face and onto the light-transmissive retro-reflective film at an angle at which the light is transmitted out of the front face of the light guide and through the light-transmissive retro-reflective film.

The amount of light extracted out of the front face of the light guide can be enhanced by light-scattering particles added to the transparent material of the light guide. Moreover, a back reflector can be arranged at the back face of the light guide. Reflectors can also be arranged at the side faces of the light guide. Both the back reflector and the side face reflectors preferably are diffuse reflective, specular reflective, or scattering reflective films with high reflection efficiency. Arranging reflectors and, in particular, highly diffuser or specular or scattering reflective films along the back and side faces of the light guide provides for a light guide in which light can escape exclusively through the front face so that most of the light of the light source can be used for illuminating the indicia. Accordingly, such a design is highly efficient with regard to the required brightness, even illumination, and power consumption.

Moreover, other light extraction mechanisms, films or paints (in addition to, or as an alternative to, the reflectors mentioned before) can be used in the invention. Also light-extraction elements printed onto a surface of the light guide (e.g. dots of variable size, shape and density) can be employed. Such arrangements are described, for example, in US-A-5,736,686; 5,649,754; 5,600,462; 5,377,084; 5,363,294; 5,289,351; 5,262,928; 5,667,289; and 3,241,256. Other light extraction arrangements useful for the invention are described in US-A-5,618,096, WO-A-92/05535, and WO-A-01/71248.

In another preferred embodiment of the present invention, the light guide is a solid light guide. Basically, a solid light guide is more stable than a hollow light guide and, accordingly, is more useful for automotive applications. The solid light guide can have a plate-like shape or a wedge-like shape. In the latter case, the light guide is provided with opposite narrow and wide side faces wherein the light source is arranged along the wide side face. Due to the wedge-like shape light rays emitted from the light source can be reflected more uniformly from the back face towards the front face of the light guide even within areas of the light guide opposite to the light source and relatively far away therefrom thereby compensating for decreased light intensity in these areas. According to the invention, plate-like and wedge-like shapes can also be used for hollow light guides.

In a preferred embodiment of the invention, an indicia film provided with the indicia is laminated onto a transparent support film by means of a transparent optically clear adhesive. Most preferably, the adhesive has a refractive index no greater than 1.3. Also the light-transmissive retro-reflective film can be adhered to the support film. This arrangement is located in front of the light guide and can be removed therefrom. The light guide and the support film can be mechanically fastened allowing removability of the support film including indicia and light-transmissive retro-reflective films.

As an alternative, the light-transmissive retro-reflective film can be directly provided with indicia printed thereon or applied thereto in a different manner. The indicia film or light-transmissive retro-reflective film can be directly adhered to the front face of the light guide by means of an optical clear (transparent) adhesive which most preferably has a refractive index no greater than 1.3. In this design, no air interface is provided between the light guide and the light-transmissive retro-reflective film or indicia film. For this construction a tapered light guide, i.e. a light guide of a wedge-like type is preferred for uniform light distribution over the front face of the light guide. Namely, due to the adhesive no air is entrapped any longer at the interface between the light guide and the light-transmissive retro-reflective film. Therefore, less total internal reflections take place at the front face of the light guide. This is compensated by the back face of the light guide being tapered increasing the amount of reflections of light from the back face into the light guide.

Optionally other mechanisms than a tapered back face of the light guide for increasing reflections at the back face of the light guide compensating for less reflections at the front face of the light guide can be used. These mechanisms are referred to above in connection with the light extraction mechanisms. For instance, printed dots or other light extractor elements can be used.

It is to be noted that also in case of the indicia film and/or light-transmissive retro-reflective film being carried by a support film, this film assembly can be adhered to the front face of the light guide by means of an optical clear (transparent) adhesive as mentioned above.

Moreover, with regard to safety requirements it is preferred that the indicia film adhered to the light-transmissive retro-reflective film or a support film will be automatically destroyed upon removal. This can be achieved e.g. by providing slits in the indicia film. These safety features are basically known in the art from e.g. stickers or other graphic films attached to car windows, for instance. These safety systems are also generally known from tamper-indicating theft protecting articles as for example described in US-B-6,372,341. Suitable sheetings for the indicia films to be used in the present invention are also available from Minnesota Mining and Manufacturing under the trade names Scotchlight^{™} VP5580 or VP5570 or VP5490 or VP5480.

As mentioned above, the light guide of the license plate according to the invention is edge-lit by means of an elongate light source. This light source can be a fluorescent lamp arranged along at least one of the side faces of the light guide. However, although cold cathode fluorescent lamps have rather good luminous efficiency, they suffer from some disadvantages when used for illuminating a license plate. Namely, fluorescent lamps need special electric circuitry and high voltage which generates electronic noise and, accordingly, requires EMC/EMI shielding measures.

Moreover, fluorescent lamps generally are too bright for use in license plates and are not dimmable so that the illumination of the license plate has to be reduced by other means resulting in a loss of the overall efficiency of the system.

In a preferred embodiment of the invention, the elongate light source is realized by several LEDs arranged in a linear array. LEDs are increasingly utilized in particular in automotive lighting (both for interior and exterior of a vehicle). LEDs are known to have a very long lifespan without maintenance requirements. Within recent years LEDs emitting white light have become available at reasonable costs. The advantage of the provision of several light emitting elements arranged in a linear array instead of one common elongate light source is that, in case of failure of individual light emitting elements, illumination of the license plate is still given.

Moreover, individual light emitting elements make it possible to illuminate the license plate with different colors within different areas of the license plate. Providing light of different colors within different areas of the license plate can also be achieved by a segmented light guide emitting different colors within defined areas by means of highly specular and/or diffuse reflective films for separating defined areas emitting different light colors, or retro-reflective films which are double-side coated with transparent clear adhesives.

Moreover, the light emitting elements can be differently controlled and driven for different purposes. For instance, in case of an emergency, the light emitting elements can be flashed simultaneously, sequentially or alternately so that specific lighting effects can be realized for drawing the attention of persons to a vehicle. The light emitting elements can also be connected to the car hazard warning lights.

It is also possible to realize the elongate light source suitable for the license plate according to the invention by use of optical fiber technology. In one example several optical fibers are arranged such that their end faces are located opposite to the side face of the light guide. As in the case of individual LEDs, the end faces of the optical fibers provide individual light emitting elements. In an alternative design, a light tube or the like optical fiber is located along a side face of the light guide, with light transmitted through the light tube exiting laterally therefrom. Those skilled in the art will know these types of laterally emitting light tubes or optical fibers.

An even better and more homogenous and energy-efficient light distribution in the light guide can be realized by coupling the light of the individual light emitting elements to the light guide by means of optical lenses located at the side face of the light guide. The lens characteristic can be achieved by forming rounded notches in the side face of the light guide wherein each light emitting element has a separate notch associated thereto. These notches can receive the light emitting elements, i.e. the ends of optical fibers or the LEDs which can be either normal LEDs with rounded housings or surface mount device LEDs having a flat structure with a transparent covering material having also lens characteristics. Due to the lens characteristic at the side face of the light guide along which the light is coupled to the light guide, the light emitted from the light emitting elements and transmitted into the light guide will be spread within the light guide. Light reflected from the surface of the notches and the remaining areas of the side face of the light guide can be reflected back to the side face and notches by means of a side face reflector as mentioned before and arranged such that the light emitting elements are located between the light guide and the reflector.

The light guide and the elongate light source can be integral parts of the body of a car or can be a unit attached to the body of a car. The shape of the light guide and, in particular, the shape of the front face of the light guide can be designed to follow the overall shape of the car body. Accordingly, the front face of the light guide can be for example convexly or concavely curved. To this front face fixedly mounted at the car body, the remaining parts of the license plate according to the invention can be attached i.e. mechanically or by means of an adhesive as mentioned above. This allows for a very large degree of freedom when designing the part of the car body surrounding the license plate. In particular the license plate does no longer limit the design of the car body because the license plate and the shape thereof can be adapted to the car body.

### BRIEF DESCRIPTION OF THE DRAWINGS

Several embodiments of the invention are depicted in the drawings in which
- Fig. 1: is a cross sectional view through a license plate according to a first embodiment of the invention,
- Fig. 2: is an isometric and exploded view of the license plate shown in the cross sectional view in Fig. 1,
- Fig. 3: is a part of a cross sectional view taken along III-III of Fig. 1,
- Fig. 4: is a cross sectional view through a different embodiment of a license plate according to the present invention, and
- Fig. 5: a schematic view for showing the integration of the front face of the light guide of the license plate in a curved part of the body of a car.

### DETAILED DESCRIPTION OF THE PREFERRED EMBODIMENTS

Throughout the drawings like elements and parts of the different embodiments of the invention are referred to by like reference numerals.

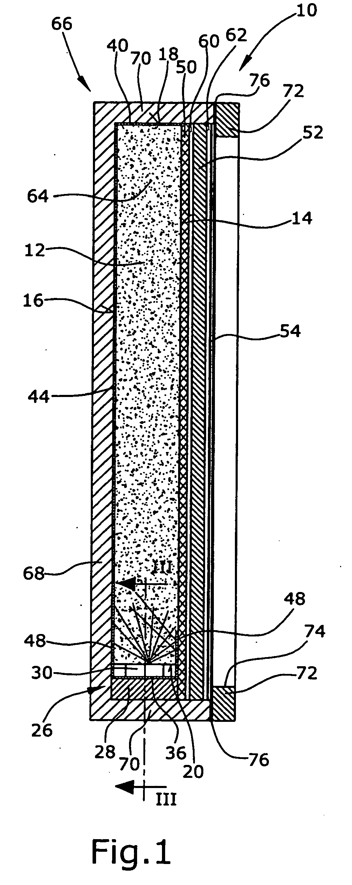

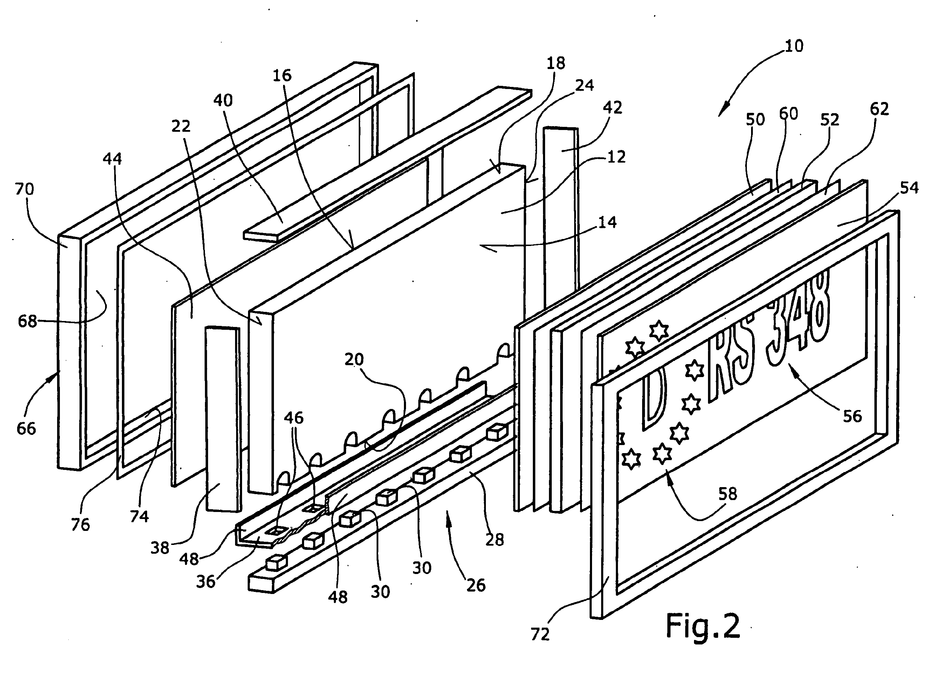

In Figs. 1 to 3 a first embodiment of a license plate according to the invention is shown in greater detail. According to these Figures, the license plate 10 comprises a solid light guide 12 made of a transparent synthetic material (for example, acrylic, e.g. polymethylmetacylate, or polycarbonate) and having a plate-like shape. The light guide 12 comprises a major front face 14 and an opposite major back face 16 as well as opposite side faces 18,20 and 22,24 (see also Fig. 2). Along one of the side faces (in this embodiment along the lower side face 20) of the light guide 12, an elongate light source 26 is arranged comprising a printed circuit board 28 or the like carrier strip carrying several LEDs 30 arranged side by side for forming a linear array. The elongate light source 26 provides for edge illumination of the light guide 12.

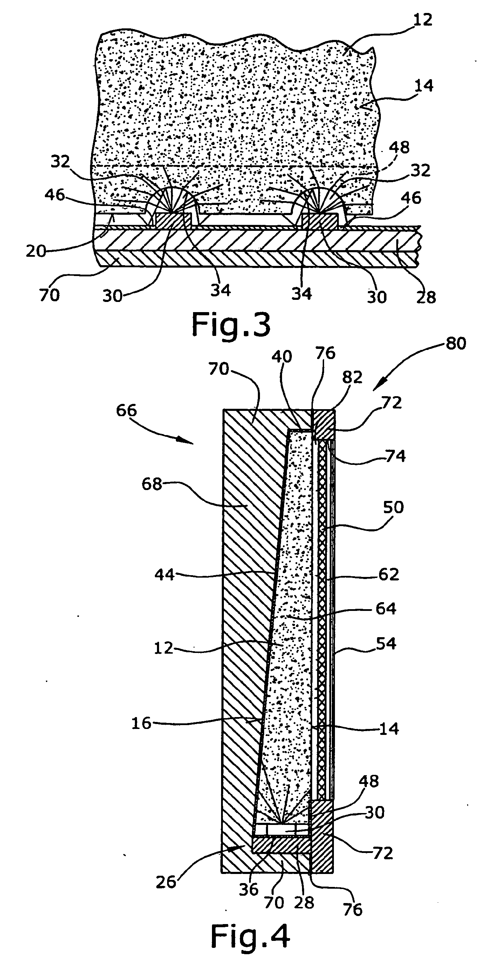

As can be seen in Figs. 2 and 3, associated to each LED 30 there is formed a notch 32 in the lower side face 20 of the light guide 12. Within the notches 32, the lower side face 20 of the light guide 12 is provided with concave curvatures 34 acting as diverging lenses integral with the light guide 12 for spreading the light rays emitted by the LED towards and transmitted into the light guide 12. This can be seen in particular in Fig. 3.

Highly specular or diffuse reflectors 36,38,40, and 42 are arranged along the side faces 18,20,22,24 of the light guide 12. These reflectors are adhered to the light guide 12 by means of an optically clear (transparent) adhesive preferably having a refractive index no greater than 1.3. Other optical clear adhesives can also be used. Suitable adhesives are available from 3M Company, St. Paul, USA (e.g. #8141, #8142, #8161, or #9483). Moreover, a highly diffuse or specular back reflector 44 is arranged to face the back face 16 of the light guide 12. The back reflector 44 as well as the reflectors 36,38,40,42 are comprised of a film. For example such a film is available from 3M Company, St. Paul, USA, and is named Visible Mirror Film VM 2002 or VM 2000 F1A6 or Light Enhancement Film 3635-100.

As can be seen in particular from Figs. 1 and 2, the strip-like reflector 36 has its lower side face 20 provided with holes 46 through which the LEDs 30 extend. Moreover, the reflector 36 at its lateral edges 48 extends along the bottom edges of the front and back faces 14,16 of the light guide 12. Within these lateral edges 48 the reflector 36 reflects light emitted from the LEDs 30 back into the light guide 12.

Accordingly, all the light of the LEDs 30 transmitted into the light guide 12 can exit only through the front face 14 of the light guide for creating an illuminated side of the light guide 12.

Arranged in front of the front face 14 of the light guide 12 is a sandwich structure of several layers comprising a light-transmissive retro-reflective film 50, a clear support film 52 which can be embossed, and an indicia film 54 provided with indicia 56,58 in the form of characters, digits and graphics in this embodiment. The adjacent films are adhered to each other by means of light-transmissive adhesive (e.g. stretch-release type VP 5290 available from 3M Company, St.Paul, USA). The light-transmissive retro-reflective film 50 can be a beaded or prismatic or cube corner film as basically known to those skilled in the art. The retro-reflective properties of this film are used both for external light impinging onto and through the indicia film 54 as well as internal light from the light guide 12. In the latter case the light-transmissive retro-reflective film 50 together with the back reflector 44 provides for multiple light reflections through the light guide 12 resulting in an homogenous illumination of the front face 14 of the light guide 12. Moreover, the light guide 12 can be provided with light scattering particles 64 substantially homogenously distributed within the material of the light guide 12 and having different light diffractive properties.

As an alternative for a separate indicia film 54, the indicia 56,58 can be printed on the clear support film 52 or directly onto the light-transmissive retro-reflective film 50. A protective clear film (not shown) can be laminated over the printed surface of the support film 52 if necessary.

The sandwich structure comprising films 50,52, and 54 as mentioned above is mechanically attached to the front face 14 of the light guide 12 by any suitable mechanical fastening means such as clamps or the like. In this embodiment, a housing 66 comprising a rear wall 68 and side walls 70 projecting therefrom encompasses the light guide 12, the elongate light source 26 and the films 50,52, and 54. Attached to the front edges of the side walls 70 is a frame 72 that grips the sandwich structure of the layers 50,52, and 54 so as to fasten the same in front of the light guide 12. The frame 72 defines an opening 74 within which the front face 14 of the light guide 12 is exposed. A sealing element 76 is arranged between the frame 72 and the side walls 70 of the housing 66. The frame 72 can be secured to the side walls 70 or rear wall 68 by any suitable means like screws, clamps, or the like allowing the assembly of the license plate and the insertion removal of the sandwich structure. If detaching the frame 72 from the side walls 70 is not necessary (see e.g. the embodiment of Fig. 4 referred to later), the frame 72 can also be fixedly adhered or bonded to the side walls 70.

An alternative embodiment of a license plate according to the invention is shown in cross sectional view in Fig. 4. This license plate 80 is of a construction similar to that of the license plate 10 according to Figs. 1 to 3. The differences relates to the shape of the light guide 12 which is tapered towards its upper side face 18. This tapered version of the light guide 12 provides the advantage that within the upper portion, i.e. the portion spaced from the elongate light source 26, the number of reflections at the back face 16 of the light guide 12 is increased, which compensates for the decreasing intensity of the reflected light. Therefore, the tapered configuration provides a more equal distribution of the light.

Another difference between the license plates 80 and 10 relates to the fact that the light-transmissive retro-reflective film 50 with the indicia film 54 adhered thereto by means of the adhesive layer 62, is directly adhered to the front face 14 of the light guide 12 by means of an adhesive layer 82. Also these adhesive layers 62 and 82 can be preferably from the stretch-release type adhesive tape VP 5290 available from 3M Company, St. Paul, USA. However, other optical clear adhesives can be used as well. The adhesive 82 should be capable to be peeled off from the light guide 12 without any residuals left at the front face 14 of the light guide so that the indicia film 54 and light-transmissive retro-reflective film 50 can be replaced by another combination of indicia film and light-transmissive retro-reflective film. However, due to safety aspects and theft protection aspects, it is important that a replacement and peeling-off of the indicia film 54 is accompanied by destruction. These techniques are basically known from stickers or the like graphics adhered to car windows or other surfaces.

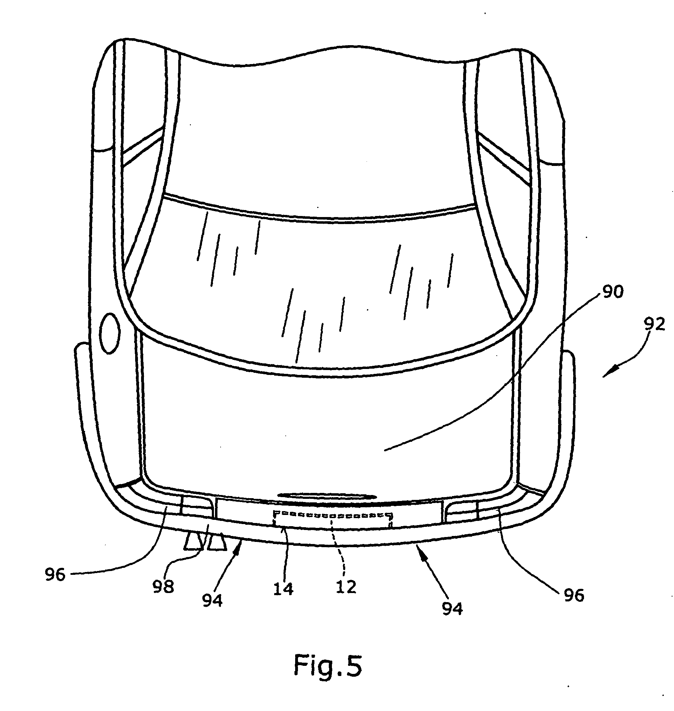

In Fig. 5 it is illustrated that the rear face 14 of the light guide 12 of the license plate 10 or 80 can be shaped so as to follow the shape of the body 90 of a car 92 within the area 94 adjacent to the location of the license plate. In Fig. 5 the rear end of the body 90 of the car 92 including the rear lamps 96 and bumper 98 is shown.

Although the invention has been described and illustrated with reference to specific illustrative embodiments thereof, it is not intended that the invention be limited to those illustrative embodiments. Those skilled in the art will recognise that variations and modifications can be made without departing from the true scope of the invention as defined by the claims that follow. It is therefore intended to include within the invention all such variations and modifications as fall within the scope of the appended claims and equivalents thereof.

## Claims

1. Illuminated license plate for vehicles, comprising
- a light guide (12) having opposite major front and back faces (14,16) and side faces (18,20,22,24) therebetween,
- an elongate light source (26) arranged along at least a portion of at least one of said side faces (18,20,22,24) of said light guide (12) for illuminating said light guide (12), and
- indicia (56,58) arranged in front of said front face (14) of said light guide (12),
**characterized by**
- a light-transmissive retro-reflective film (50),
- wherein said light-transmissive retro-reflective film (50) is arranged in front of said front face (14) of said light guide (12).

2. Illuminated license plate according to claim 1, wherein said light-transmissive retro-reflective film (50) is arranged between said indicia (56,58) and said light guide (12).

3. Illuminated license plate according to claim 1, wherein said indicia (56,58) are arranged between said light-transmissive retro-reflective film (50) and said light guide (12).

4. Illuminated license plate according to any one of claims 1 to 3, wherein said indicia (56,58) are arranged on a separate film (54).

5. Illuminated license plate according to any one of claims 1 to 3, wherein said indicia (56,58) are arranged on said light-transmissive retro-reflective film (50).

6. Illuminated license plate according to any one of claims 1 to 5, further comprising a back reflector (44) arranged at said back face (16) of said light guide (12).

7. Illuminated license plate according to any one of claims 1 to 6, wherein said back reflector (44) is a diffuse reflector or a specular reflector or a scattering reflector.

8. Illuminated license plate according to any one of claims 1 to 7, wherein said light guide (12) is a solid light guide.

9. Illuminated license plate according to claim 8, wherein said solid light guide (12) comprises light scattering particles (64).

10. Illuminated license plate according to claim 8 or 9, wherein said solid light guide (12) is a flat plate.

11. Illuminated license plate according to claim 8 or 9, wherein said solid light guide (12) has a wedge-like shape comprising a narrow side face and an opposite wide side face and wherein said elongate light source (26) is arranged along said wide side face of said solid light guide (12).

12. Illuminated license plate according to any one of claims 6 to 11, wherein said indicia (56,58) are arranged on said front face (14) of said solid light guide (12).

13. Illuminated license plate according to any one of claims 1 to 12, wherein said light source (26) comprises several light emitting elements arranged adjacent to each other.

14. Illuminated license plate according to claim 13, wherein said light emitting elements are capable of emitting light of different colors.

15. Illuminated license plate according to claim 13 or 14, wherein said light emitting elements are LEDs (30).

16. Illuminated license plate according to claim 15, wherein said LEDs (30) are surface-mounted devices mounted onto a support strip (28) extending along at least a portion of said side face (20) of said light guide (12).

17. Illuminated license plate according to claims 13 to 16 as far as depending on claim 8, wherein said side face (20) of said solid light guide (12) is provided with notches (32) and wherein the light emitting elements emit their light towards the notches (32).

18. Illuminated license plate according to claim 17, wherein said notches (32) are formed so as to provide an optical lens for spreading light emitted from said light emitting elements within said solid light guide (12).

19. Illuminated license plate according to any one of claims 1 to 18, further comprising an edge reflector (36,38,40,42) arranged along at least one of said side faces (18,20,22,24) of said light guide (12).

20. Illuminated license plate according to claim 19, wherein said edge reflector (36,38,40,42) is a specular or diffuser or a scattering reflector.

21. Illuminated license plate according to claim 19 or 20, wherein said edge reflector (36,38,40,42) is in the shape of a strip.

22. Illuminated license plate according to any one of claims 19 to 21, wherein said edge reflector (36) at said side face (20) of said light guide (12) provided with said light source (26) extends around said light source (26) and up to an area of said front and back faces (14,16) of said light guide (12) adjacent to said light source (26).

23. Illuminated license plate according to any one of claims 1 to 22, wherein said indicia (56,58) are removably arranged and destroyed when removed.

24. Illuminated license plate according to any one of claims 1 to 23, wherein said indicia (56,58) is removably attached to a light-transmissive support (52) and destroyed when removed from said support (52).

25. Illuminated license plate according to claim 24, wherein said support is an additional support film (52) or said light-transmissive retro-reflective film (50).

26. Illuminated license plate according to any one of claims 1 to 21, wherein said light guide (12), said light source (26), said indicia (56,58), and said - light-transmissive retro-reflective film (50) are arranged within a housing (66) having an opening (74) in front of said front face (14) of said light guide (12).

27. Illuminated license plate according to any one of claims 1 to 26, further comprising a housing (66) having walls (68,70) encapsulating the arrangement of said light guide (12) and said light source (26), and having an opening (74) for exposing said front face (14) of said light guide (12), and wherein said light-transmissive retro-reflective film (50) or if provided said indicia film (54) is adhered to said front face (14) of said light guide (12).

28. Vehicle, in particular power driven vehicle, comprising
- a body, and
- a license plate (10,80) according to any one of the preceding claims.

29. Vehicle according to claim 28, wherein at least said light guide (12) and said elongate light source (26) are mounted to said body.

## Patentansprüche

1. Leuchtende Kennzeichentafel für Fahrzeuge, mit
- einem Lichtleiter (12) mit gegenüberliegenden vorderen und hinteren Hauptflächen (14, 16) und zwischen diesen angeordneten Seitenflächen (18, 20, 22, 24),
- einer entlang mindestens eines Teils mindestens einer der Seitenflächen (18, 20, 22, 24) des Lichtleiters (12) angeordneten länglichen Lichtquelle (26) zum Beleuchten des Lichtleiters (12), und
- vor der Vorderfläche (14) des Lichtleiters (12) angeordneten Kennzeichen (56, 58), **gekennzeichnet durch**
- eine lichtdurchlässige retroreflektierende Folie (50),
- wobei die lichtdurchlässige retroreflektierende Folie (50) vor der Vorderfläche (14) des Lichtleiters (12) angeordnet ist.

2. Leuchtende Kennzeichentafel nach Anspruch 1, wobei die lichtdurchlässige retroreflektierende Folie (50) zwischen den Kennzeichen (56, 58) und dem Lichtleiter (12) angeordnet ist.

3. Leuchtende Kennzeichentafel nach Anspruch 1, wobei die Kennzeichen (56, 58) zwischen der lichtdurchlässigen retroreflektierenden Folie (50) und dem Lichtleiter (12) angeordnet sind.

4. Leuchtende Kennzeichentafel nach einem der Ansprüche 1 bis 3, wobei die Kennzeichen (56, 58) auf einer separaten Folie (54) angeordnet sind.

5. Leuchtende Kennzeichentafel nach einem der Ansprüche 1 bis 3, wobei die Kennzeichen (56, 58) auf der lichtdurchlässigen retroreflektierenden Folie (50) angeordnet sind.

6. Leuchtende Kennzeichentafel nach einem der Ansprüche 1 bis 5, ferner mit einem Rückreflektor (44), der an der Rückfläche (16) des Lichtleiters (12) angeordnet ist.

7. Leuchtende Kennzeichentafel nach einem der Ansprüche 1 bis 6, wobei der Rückreflektor (44) ein diffuser Reflektor oder ein Spiegelreflektor oder ein lichtstreuender Reflektor ist.

8. Leuchtende Kennzeichentafel nach einem der Ansprüche 1 bis 7, wobei der Lichtleiter (12) ein massiver Lichtleiter ist.

9. Leuchtende Kennzeichentafel nach Anspruch 8, wobei der massive Lichtleiter (12) lichtstreuende Partikel (64) aufweist.

10. Leuchtende Kennzeichentafel nach Anspruch 8 oder 9, wobei der massive Lichtleiter (12) eine flache Platte ist.

11. Leuchtende Kennzeichentafel nach Anspruch 8 oder 9, wobei der massive Lichtleiter (12) eine keilförmige Form hat, welche eine schmale Seitenfläche und eine gegenüberliegende breite Seitenfläche aufweist, und wobei die längliche Lichtquelle (26) entlang der breiten Seitenfläche des massiven Lichtleiters (12) angeordnet ist.

12. Leuchtende Kennzeichentafel nach einem der Ansprüche 6 bis 11, wobei die Kennzeichen (56, 58) an der Vorderfläche (14) des massiven Lichtleiters (12) angeordnet sind.

13. Leuchtende Kennzeichentafel nach einem der Ansprüche 1 bis 12, wobei die Lichtquelle (26) mehrere nebeneinander angeordnete lichtemittierende Elemente aufweist.

14. Leuchtende Kennzeichentafel nach Anspruch 13, wobei die lichtemittierenden Elemente in der Lage sind, Licht unterschiedlicher Farben zu emittieren.

15. Leuchtende Kennzeichentafel nach Anspruch 13 oder 14, wobei die lichtemittierenden Elemente LEDs (30) sind.

16. Leuchtende Kennzeichentafel nach Anspruch 15, wobei die LEDs (30) oberflächenmontierte Elemente sind, die auf einem Haltestreifen (28) angeordnet sind, der sich entlang mindestens eines Teils der Seitenfläche (20) des Lichtleiters (12) erstreckt.

17. Leuchtende Kennzeichentafel nach Anspruch 13 bis 16, sofern abhängig von Anspruch 8, wobei die Seitenfläche (20) des massiven Lichtleiters (12) mit Aussparungen (32) ausgestattet ist und wobei die lichtemittierenden Elemente ihr Licht in Richtung auf die Aussparungen (32) emittieren.

18. Leuchtende Kennzeichentafel nach Anspruch 17, wobei die Aussparungen (32) so ausgebildet sind, dass sie eine optische Linse zum Ausbreiten von durch die lichtemittierenden Elemente omittiertem Licht innerhalb des massiven Lichtleiters (12) bilden.

19. Leuchtende Kennzeichentafel nach einem der Ansprüche 1 bis 18, ferner mit einem Randreflektor (36, 38, 40, 42), der entlang mindestens einer der Seitenflächen (18, 20, 22, 24) des Lichtleiters (12) angeordnet ist.

20. Leuchtende Kennzeichentafel nach Anspruch 19, wobei der Randreflektor (36, 38, 40, 42) ein Spiegelreflektor oder ein diffuser oder ein lichtstreuender Reflektor ist.

21. Leuchtende Kennzeichentafel nach Anspruch 19 oder 20, wobei der Randreflektor (36, 38, 40, 42) die Form eines Streifens hat.

22. Leuchtende Kennzeichentafel nach einem der Ansprüche 19 bis 21, wobei sich der Randreflektor (36) an der Seitenfläche (20) des mit der Lichtquelle (26) ausgestatteten Lichtleiters (12) um die Lichtquelle (26) herum und bis zu einem zu der Lichtquelle (26) benachbarten Bereich der Vorder- und Rückflächen (14, 16) des Lichtleiters (12) erstreckt.

23. Leuchtende Kennzeichentafel nach einem der Ansprüche 1 bis 22, wobei die Kennzeichen (56, 58) entfernbar angeordnet sind und zerstört werden, wenn sie entfernt werden.

24. Leuchtende Kennzeichentafel nach einem der Ansprüche 1 bis 23, wobei die Kennzeichen (56, 58) entfernbar an einem lichtdurchlässigen Träger (52) angebracht sind und zerstört werden, wenn sie von dem Träger (52) entfernt werden.

25. Leuchtende Kennzeichentafel nach Anspruch 24, wobei der Träger eine zusätzliche Trägerfolie (52) oder die lichtdurchlässige retroreflektierende Folie (50) ist.

26. Leuchtende Kennzeichentafel nach einem der Ansprüche 1 bis 21, wobei der Lichtleiter (12), die Lichtquelle (26), die Kennzeichen (56, 58) und die lichtdurchlässige retroreflektierende Folie (50) in einem Gehäuse (66) angeordnet sind, das mit einer Öffnung (74) vor der Vorderfläche (14) des Lichtleiters (12) versehen ist.

27. Leuchtende Kennzeichentafel nach einem der Ansprüche 1 bis 26, ferner mit einem Gehäuse (66), das Wände (68, 70) aufweist, welche die Anordnung des Lichtleiters (12) und der Lichtquelle (26) umgeben, und mit einer Öffnung (74) zum Freilegen der Vorderfläche (14) des Lichtleiters (12), und wobei die lichtdurchlässige retroreflektierende Folie (50) oder, falls vorhanden, die Kennzeichen-Folie (54) an der Vorderfläche (14) des Lichtleiters (12) haftet.

28. Fahrzeug, insbesondere ein Kraftfahrzeug,
- einer Karosserie, und
- einer Kennzeichentafel (10, 80) nach einem der vorhergehenden Ansprüche.

29. Fahrzeug nach Anspruch 28, wobei mindestens der Lichtleiter (12) und die längliche Lichtquelle (26) an der Karosserie montiert sind.

## Revendications

1. Plaque d'immatriculation éclairée pour véhicules comprenant
- un guide de lumière (12) présentant des faces avant et arrière (14, 16) majeures opposées et des faces latérales (18, 20, 22, 24) entre elles,
- une source de lumière allongée (26) disposée le long d'au moins une portion d'au moins l'une desdites faces latérales (18, 20, 22, 24) dudit guide de lumière (12) pour éclairer ledit guide de lumière (12) et
- des inscriptions (56, 58) disposés à l'avant de ladite face avant (14) dudit guide de lumière (12),
**caractérisée par**
- un film rétroréfléchissant transmettant la lumière (50),
- ledit film rétroréfléchissant transmettant la lumière (50) étant disposé à l'avant de ladite face avant (14) dudit guide de lumière (12).

2. Plaque d'immatriculation éclairée selon la revendication 1, ledit film rétroréfléchissant transmettant la lumière (50) étant disposé entre lesdits inscriptions (56, 58) et ledit guide de lumière (12).

3. Plaque d'immatriculation éclairée selon la revendication 1, lesdits inscriptions (56, 58) étant disposés entre ledit film rétroréfléchissant transmettant la lumière (50) et ledit guide de lumière (12).

4. Plaque d'immatriculation éclairée selon l'une quelconque des revendications 1 à 3, lesdits inscriptions (56, 58) étant disposés sur un film séparé (54).

5. Plaque d'immatriculation éclairée selon l'une quelconque des revendications 1 à 3, lesdits inscriptions (56, 58) étant disposés sur ledit film rétroréfléchissant transmettant la lumière (50).

6. Plaque d'immatriculation éclairée selon l'une quelconque des revendications 1 à 5, comprenant en plus un réflecteur arrière (44) disposé sur ladite face arrière (16) dudit guide de lumière (12).

7. Plaque d'immatriculation éclairée selon l'une quelconque des revendications 1 à 6, ledit réflecteur arrière (44) étant un réflecteur diffuseur ou un réflecteur spéculaire ou encore un réflecteur à effet de dispersion.

8. Plaque d'immatriculation éclairée selon l'une quelconque des revendications 1 à 7, ledit guide de lumière (12) étant un guide de lumière solide.

9. Plaque d'immatriculation éclairée selon la revendication 8, ledit guide de lumière solide (12) comprenant des particules de dispersion de la lumière (64).

10. Plaque d'immatriculation éclairée selon la revendication 8 ou 9, ledit guide de lumière solide (12) étant une plaque plane.

11. Plaque d'immatriculation éclairée selon la revendication 8 ou 9, ledit guide de lumière solide (12) ayant une forme de type clavette comprenant une face latérale étroite et une face latérale opposée large et ladite source de lumière allongée (26) étant disposée le long de ladite face latérale large dudit guide de lumière solide (12).

12. Plaque d'immatriculation éclairée selon l'une quelconque des revendications 6 à 11, lesdits inscriptions (56, 58) étant disposés sur ladite face avant (14) dudit guide de lumière solide (12).

13. Plaque d'immatriculation éclairée selon l'une quelconque des revendications 1 à 12, ladite source de lumière (26) comprenant plusieurs éléments émetteurs de lumière disposés les uns à côté des autres.

14. Plaque d'immatriculation éclairée selon la revendication 13, lesdits éléments émetteurs de lumière étant capables d'émettre de la lumière de différentes couleurs.

15. Plaque d'immatriculation éclairée selon la revendication 13 ou 14, lesdits éléments émetteurs de lumière étant des LED (30).

16. Plaque d'immatriculation éclairée selon la revendication 15, lesdites LED (30) étant des composants montés en surface disposés sur une bande support (28) s'étendant le long d'au moins une portion de ladite face latérale (20) dudit guide de lumière (12).

17. Plaque d'immatriculation éclairée selon les revendications 13 à 16 dans la mesure où elles dépendent de la revendication 8, ladite face latérale (20) dudit guide de lumière solide (12) étant munie d'encoches (32) et les éléments émetteurs de lumière émettant leur lumière en direction des encoches (32).

18. Plaque d'immatriculation éclairée selon la revendication 17, lesdites encoches (32) étant façonnées de manière à réaliser une lentille optique pour la diffusion de la lumière émise depuis lesdits éléments émetteurs de lumière à l'intérieur dudit guide de lumière solide (12).

19. Plaque d'immatriculation éclairée selon l'une quelconque des revendications 1 à 18, comprenant en plus un réflecteur de bord (36, 38, 40, 42) disposé le long d'au moins l'une desdites faces latérales (18, 20, 22, 24) dudit guide de lumière (12).

20. Plaque d'immatriculation éclairée selon la revendication 19, ledit réflecteur de bord (36, 38, 40, 42) étant un réflecteur spéculaire ou diffuseur ou encore à effet de dispersion.

21. Plaque d'immatriculation éclairée selon la revendication 19 ou 20, ledit réflecteur de bord (36, 38, 40, 42) ayant la forme d'une bande.

22. Plaque d'immatriculation éclairée selon l'une quelconque des revendications 19 à 21, ledit réflecteur de bord (36) au niveau de ladite face latérale (20) dudit guide de lumière (12) muni de ladite source de lumière (26) s'étendant autour de ladite source de lumière (26) et jusqu'à une zone desdites faces avant et arrière (14, 16) dudit guide de lumière (12) voisine de ladite source de lumière (26).

23. Plaque d'immatriculation éclairée selon l'une quelconque des revendications 1 à 22, lesdits inscriptions (56, 58) étant disposés de manière à pouvoir être retirés et étant détruits lorsqu'ils sont retirés.

24. Plaque d'immatriculation éclairée selon l'une quelconque des revendications 1 à 23, lesdits inscriptions (56, 58) étant fixés de manière amovible à un support transmettant la lumière (52) et étant détruits lorsqu'ils sont retirés dudit support (52).

25. Plaque d'immatriculation éclairée selon la revendication 24, ledit support étant un film support supplémentaire (52) ou ledit film rétroréfléchissant transmettant la lumière (50).

26. Plaque d'immatriculation éclairée selon l'une quelconque des revendications 1 à 21, ledit guide de lumière (12), ladite source de lumière (26), lesdits inscriptions (56, 58) et ledit film rétroréfléchissant transmettant la lumière (50) étant disposés à l'intérieur d'un boîtier (66) possédant une ouverture (74) à l'avant de ladite face avant (14) dudit guide de lumière (12).

27. Plaque d'immatriculation éclairée selon l'une quelconque des revendications 1 à 26, comprenant en plus un boîtier (66) possédant des parois (68, 70) qui enrobent l'arrangement dudit guide de lumière (12) et de ladite source de lumière (26) et possédant une ouverture (74) pour exposer ladite face avant (14) dudit guide de lumière (12) et ledit film rétroréfléchissant transmettant la lumière (50) ou, s'il est prévu, ledit film des inscriptions (54) étant collé sur ladite face avant (14) dudit guide de lumière (12).

28. Véhicule, notamment véhicule automobile, comprenant
- une carrosserie et
- une plaque d'immatriculation (10, 80) selon l'une quelconque des revendications précédentes.

29. Véhicule selon la revendication 28, au moins ledit guide de lumière (12) et ladite source de lumière allongée (26) étant montés sur ladite carrosserie.
